(19) Europäisches Patentamt
European Patent Office
Office européen des brevets

(11) **EP 1 904 588 B1**

(12) **EUROPÄISCHE PATENTSCHRIFT**

(45) Veröffentlichungstag und Bekanntmachung des Hinweises auf die Patenterteilung:
**17.09.2014   Patentblatt 2014/38**

(21) Anmeldenummer: **06762361.1**

(22) Anmeldetag: **04.07.2006**

(51) Int Cl.:
*C09C 1/42* (2006.01)          *C09C 1/30* (2006.01)
*C11D 3/00* (2006.01)          *C11D 3/37* (2006.01)
*C11D 3/12* (2006.01)

(86) Internationale Anmeldenummer:
**PCT/EP2006/006467**

(87) Internationale Veröffentlichungsnummer:
**WO 2007/003402 (11.01.2007 Gazette 2007/02)**

(54) **SCHICHTSILICAT-SLURRIES MIT HOHEM FESTSTOFFGEHALT**

LAYERED SILICATE SLURRIES HAVING A HIGH SOLIDS CONTENT

BARBOTINES DE SILICATE EN FEUILLETS A HAUTE TENEUR EN SOLIDES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **04.07.2005   DE 102005031176**

(43) Veröffentlichungstag der Anmeldung:
**02.04.2008   Patentblatt 2008/14**

(73) Patentinhaber: **Süd-Chemie IP GmbH & Co. KG 80333 München (DE)**

(72) Erfinder:
 • **SOHLING, Ulrich 85356 Freising (DE)**
 • **RUF, Friedrich 84184 Ast (DE)**
 • **HELD, Anna 85368 Moosburg (DE)**
 • **FALTERMAIR, Monika 85465 Langenpreising (DE)**

(74) Vertreter: **Rembold, Hansjörg et al Stolmár Scheele & Partner Blumenstraße 17 80331 München (DE)**

(56) Entgegenhaltungen:
**US-A- 4 476 029     US-A- 4 916 094
US-A- 5 104 551     US-A- 5 484 834
US-A- 5 629 368**

 • **ALEMDAR A ET AL: "The rheological properties and characterization of bentonite dispersions in the presence of non-ionic polymer PEG", JOURNAL OF MATERIALS SCIENCE, KLUWER ACADEMIC PUBLISHERS, BO, vol. 40, no. 1, 1 January 2005 (2005-01-01), pages 171-177, XP019210313, ISSN: 1573-4803, DOI: 10.1007/S10853-005-5703-4**

EP 1 904 588 B1

## Beschreibung

Die vorliegende Erfindung betrifft eine Slurry bzw. Aufschlämmung aus Schichtsilicaten mit hohem Feststoffgehalt, ein Verfahren zu seiner Herstellung und dessen Verwendung.

Für einige technische Anwendungen werden Schichtsilikate, wie z.B. Bentonit bevorzugt in dispergierter Form zudosiert. Dies ist zum Beispiel bei der Papierherstellung im Hinblick auf eine Störstoffbindung oder in der Anwendung bei Waschmittelformulierungen der Fall. So wird Bentonit während des Papierherstellungsprozesses als sogenanntes Retentionsmittel verwendet.

Der Zusatz von Bentonit zu pulverförmigen Waschmittelformulierungen dient der Erhöhung des Weichgriffs der Wäsche. Dieses Konzept wurde auch auf Flüssigwaschmittel ausgedehnt, bei denen ebenfalls durch einen Zusatz von Bentonit der Weichgriff der Wäsche erhöht werden soll.

Für die vorher beschriebenen technischen Anwendungen ist es von Interesse, Bentonit in dispergierter Form so zur Verfügung zu stellen, dass in der wässerigen Suspension bzw. kolloidalen Lösungen der Feststoffgehalt des Bentonites besonders hoch ist. Eine Herstellung von solch hoch konzentrierten Slurries ist jedoch nicht ohne weiteres möglich, weil z.B. Bentonite in wässeriger kolloidaler Lösung typischerweise Gele ausbilden. Dieser Effekt wird unter anderem auch technisch beim Einsatz der Bentonite in Verdickern eingesetzt. Die Mechanismen der Gelbildung in Bentonit ist u.a. in der Publikation von S. Abend und G. Lagaly, Applied Clay Science 16 (2000) S. 201 - 227 beschrieben.

Die US 5,484,834 offenbart eine flüssige Bentonitslurry, welche Wasser, ein Polyacrylat und ein Natriumsalz der Kieselsäure enthält. Die Bentonitslurry enthält des weiteren ein Sulphonat in einer Menge von 10-30 Gew.-%. Durch die hohe Konzentration an Dispergiermittel, welche zwischen 10 und 30% beträgt, sowie der Gegenwart von Natriumsilikat, wodurch die Slurry alkalisiert wird, sind diese nicht für Formulierungen einsetzbar, deren pH-Werte im neutralen Bereich liegen.

Die WO 93/22254 offenbart konzentrierte Bentonitslurries und ein Verfahren zu deren Herstellung. Hierbei sind in der konzentrierten wässerigen Bentonitslurry mindestens 8 Gew.-% Bentonit dispergiert enthalten. Die niedrige Viskosität wird durch Zugabe von Salzen eingestellt. Dabei handelt es sich bei dem ersten Salz um Natrium- und Lithiumverbindungen mit Anionen aus der Gruppe von Chlorid, Carbonat, Nitrat, Citrat, Sulfat, Acetat oder Phosphat, welche einzeln oder in Kombination zugefügt werden. Bei der zweiten Salzkomponente handelt es sich um Kaliumsalze, und Anionen aus der Gruppe von Chlorid, Carbonat, Nitrat, Citrat, Sulfat, Acetat, oder Phosphat bzw. Natriumsilicat, Natriumpyrophosphat oder einem Natriumpolyacrylat mit niedrigem Molekulargewicht. Eine solche Formulierung hat den Nachteil, dass sie nicht kompatibel mit flüssigen Waschmittelformulierungen ist, weil der hohe Anteil an Elektrolyten die Gelphasen zerstören oder beeinflussen kann.

Die EP 0 485 124 A1 offenbart einen Bentonit-Quellton, welcher für den Papierherstellungsprozess als flüssiges Konzentrat mit mindestens 15% Bentonit, eingesetzt wird. Die hohe Konzentration des Bentonits wird durch eine Elektrolytzugäbe erreicht. Als Elektrolyt werden Salze von einwertigen Ionen, insbesondere Natrium- und Ammoniumsalze eingesetzt. Es handelt sich um solche aus der Gruppe der Chlorid-, Sulfat oder Carbonatverbindungen. Slurries mit einer Bentonitkonzentration von 9-30 Gew.-% sind einstellbar. Für eine Anwendung im Bereich der Papierherstellung müssen diese Slurries später verdünnt werden. Bei den Elektrolyten werden vorwiegend Natrium- oder Ammoniumsalze der entsprechenden Chlorid-, Sulfat-, oder Carbonatverbindung verwendet. Die Anwendung ist nur im Bereich der Papierherstellung möglich, nicht jedoch bei Waschmitteln.

Die WO 95/09135 offenbart eine stabilisierte hochkonzentrierte Smektit-Slurry mit niedriger Viskosität und ein Heretellungsverfahren hierzu. Diese Slurry enthält zwischen 10 und 47 Gew.-% eines smektitischen Tons. Durch den Zusatz von niedermolekularen Aminen (mindestens 0,3 Gew.-%) wird das Quellen des Tons verhindert und der Feststoffgehalt der Slurry erhöht. Der Einsatz von solchen Aminen engt die Anwendung dieser Slurry ein, weil die Amine mit dem anionischen Tensidsystem Wechselwirkungen haben können. Für ein Einbringen einer Bentonitslurry in Waschmittelformulierungen wäre es deshalb von Vorteil, ohne Amin zu arbeiten. In der WO 95/09135 sind hauptsächlich Anwendungen im Hinblick auf die Papierherstellung und/oder als Verdicker beschrieben.

In der US 4,916,094 wird ein Verfahren zur Verarbeitung eines rohen Kaolinminerals beschrieben, wobei:

a) der Ton mit einer ausreichenden Menge an Wasser angemacht wird, sodass eine wäserige Aufschlämmung mit einem Feststoffgehalt von zumindest 60 Gew.-% erhalten wird, der pH-Wert der Aufschlämmung durch Zugabe von Ammoniak auf einen Wert im Bereich von etwa 3,0 bis 4,5 eingestellt wird, und eine Polyacrylsäure als Dispergiermittel in einer Menge zugegeben wird, sodass eine niedrige Scherviskosität eingestellt wird;

b) grobe Partikel von der Aufschlämmung abgetrennt werden;

c) die Aufschlämmung mit einem reduzierenden Bleichmittel gebleicht wird, und

d) eine aufgehellte Aufschlämmung eines Tons mit einer verbesserten Färbung erhalten wird, die einen Feststoffgehalt von zumindest 60 Gew.-% aufweist.

Die US 5,104,551 beschreibt ein Verfahren zur Ausfällung von phosphathaltigen Tonabfällen aus Abwasseraufschlämmungen, die bei der Auslaugung von Phosphaterzen entstehen, welches auch bei niedrigen pH-Werten und in organischen Lösungsmitteln anwendbar ist. Als Fällungsmittel wird eine Mischung aus Polyethylenoxid (Molekulargewicht > 5,000,000) und Hydroxypropylcellulose (Molekulargewicht > 1,000,000) vorgeschlagen, die zusätzlich auch noch Polyethylenglykol enthalten kann.

In der US 4 476 029 A werden verbesserte Dispergiermittel zur Herstellung von bentonithaltigen Bohrflüssigkeiten beschrieben, welche ein Mittel zur Kontrolle des Wasserverlustes sowie ein Beschwerungsmittel enthalten. Als Dispergiermittel wird ein hochtemperaturstabiles Dispergiermittel eingesetzt, welches eine Polyacrylsäure mit einem Molekülgewicht im Bereich von etwa 4.000 bis 8.000 enthält.

A. Alemdar et al., Journal of Materials Science 40 (2005) 171 - 177 beschreiben Untersuchungen zur Wirkung von Polyethylenglycol auf das Fließverhalten von mit Soda aktivierten Bentonitaufschlämmungen. Nach Zugabe von PEG wurden deutliche Änderungen der rheologischen Eigenschaften beobachtet.

Die US 5,629,368 betrifft ein Verfahren zur Herstellung flüssiger Aufschlämmungen von Bentonit, die vorteilhaft als Entwässerungs- und Retentionshilfsmittel eingesetzt werden und die zwischen 0,1 und 10 % des Natriumsalzes von Kieselsäure enthalten sowie einen Gehalt von 15 bis 35 % Bentonit. Zusätzlich ist der Aufschlämmung ein Glycol, wie beispielsweise Propylenglycol oder auch Ethylenglycol, beigesetzt sowie ein Copolymer aus Acrylsäure und Maleinsäure.

Die im Stand der Technik beschriebenen Slurries weisen jedoch Nachteile auf, so dass ein ständiger Bedarf an verbesserten Slurries mit hohem Schichtsilicatgehalt und guter Lagerstabilität besteht.

Der Erfindung lag somit die Aufgabe zugrunde, Additivkonzepte zur Herstellung von hoch konzentrierten Slurries zu entwickeln, die für eine Vielzahl von Schichtsilicattypen wie Bentoniten, z.B. Calciumbentoniten, Magnesiumbentoniten und gemischte Calcium-Natriumbentoniten einsetzbar sind und zur Herstellung von langzeit-lagerstabilen Slurries geeignet sind. Aufgabe der vorliegenden Erfindung ist es auch, eine Slurry bzw. eine Aufschlämmung aus Schichtsilicaten mit hohem Feststoffgehalt bereitzustellen, die die Nachteile des Standes der Technik vermeidet.

Diese Aufgabe wird nach einem ersten Aspekt der Erfindung durch eine Slurry bzw. Aufschlämmung enthaltend

a) mindestens 10 Gew.-% mindestens eines Schichtsilicats ausgewählt aus der Gruppe der Smektite ausgewählt aus der Gruppe bestehend aus Montmorillonit wie Bentonit und Fuller's Earth, Hectorit, Antigorit, Nontronit, Beidellit, Saponit, der Gruppe der Vermiculite, der Gruppe der Illite oder Glimmer sowie Sepiolith, Attapulgit (Palygorekit), Stevensit oder Chlorit, bezogen auf das Gesamtgewicht des Slurry bzw. der Aufschlämmung;

b) ein wässriges Suspensionsmedium;

c) eine Dispergierhilfe, ausgewählt aus mindestens einem Polyethylenglycol mit einem mittleren Molekulargewicht von weniger als 90.000.

So wurde überraschend gefunden, dass durch die vorstehenden Dispergierhilfen in Slurries mit hohem Gehalt (10 Gew.-% oder mehr) an Schichtsilicat die im Stand der Technik auftretenden Probleme einer Viskositätssteigerung bzw. Gelbildung vermieden und lagerstabile hochkonzentrierte Slurries bereitgestellt werden können.

Besonders bevorzugt weist dabei die Slurry bzw. Aufschlämmung neben den Komponenten a), b) und c) keine einwertige Metallkationen enthaltende Komponente auf. So liegt einem Aspekt der Erfindung unter anderem die Erkenntnis zugrunde, dass die Verwendung von Salzen zur Viskositätserniedrigung, insbesondere von Lithium- und Natriumsalzen problematisch ist bei der Dispergierung von Schichtsilicaten wie Bentoniten, insbesondere in der Calcium- und/oder Magnesiumform sowie von schichtsilicaten mit hohem Calcium- und/oder Magnesiumgehalt. Gibt man hier einwertige Ionen zur Dispergierung von Schichtsilicaten wie Bentoniten, insbesondere in der Calcium- und/oder Magnesiumform sowie von Schichtsilicaten mit hohem Calcium- und/oder Magnesiumgehalt. Gibt man hier einwertige Ionen zur Dispergierung zu, so findet man zunächst einen Anstieg der Viskosität was dadurch bedingt ist, dass die einwertigen Ionen den Bentonit durch einen Austausch gegen die zweiwertigen Zwischenschichtkationen aktivieren. Auch führt der Einsatz von Alkalisalzen von Polyacrylaten, wie sie z.B. in der WO 95/09135 beschrieben sind, in einem solchen Fall ebenfalls nicht zum Ziel, weil wie bei den einfachen anorganischen Salzen eine Aktivierung eintritt. So lässt sich zwar zunächst feststellen, dass beim Einsatz von Alkalisalzen von Polyacrylaten zur Dispergierung von Bentoniten niedrigviskose Slurries entstehen, nach Lagerzeit von 1-3 Tagen sind diese jedoch zu einem makroskopischen Gel verdickt.

Schichtsilicat kann z.B. ein natürliches oder synthetisches Zweischicht- oder Dreischichtsilicat sein. Als Dreischichtsilicat werden solche aus der Gruppe der Smectite (wie Montmorillonit, Hectorit, Antigorit, Nontronit, Beidellit oder Saponit), Vermiculite, Illite oder Glimmer verwendet.

Andere verwendte Schichtsilicate sind Sepiolith, Attapulgit (Palygorskit), Stevensit oder Chlorit. Unter den montmorillonithaltigen Mineralien sind insbesondere Bentonit und Fuller's Earth zu nennen, die je nach Fundort unterschiedlich zusammengesetzt sein können.

Das Schichtsilicat kann chemisch und/oder thermisch modifiziert sein. Unter einer chemischen Modifizierung versteht man insbesondere eine Aktivierung mit anorganischen und/oder organischen Säuren. Bei den anorganischen Säuren sind z.B. Salzsäure, Phosphorsäure oder Schwefelsäure zu nennen.

Die thermische Behandlung schließt die Trocknung und gegebenenfalls eine Calcinierung ein. Diese thermische Behandlung kann unter oxidierenden oder reduzierenden Bedingungen erfolgen.

Nach einer bevorzugten erfindungsgemäßen Ausführungsform handelt es sich bei den Schichtsilicaten um mindestens ein smektitisches Schichtsilicat. Weiter bevorzugt werden Schichtsilicate aus der Gruppe von Bentonit, Hektorit, Saponit oder Beidellit verwendet.

Nach einer besonders bevorzugten erfindungsgemäßen Ausführungsform handelt es sich bei dem eingesetzten Schichtsilicat um ein zweiwertige Kationen, insbesondere Erdalkalikationen wie Calcium- und/oder Magnesiumionen enthaltendes Schichtsilicat. Was hierunter zu verstehen ist, ist dem Fachmann geläufig. Die Anwesenheit von zweiwertigen Kationen in dem Schichtsilicat kann beispielsweise durch Elementaranalyse bestimmt werden. Nach einer besonders bevorzugten Ausführungsform handelt es sich um ein calciumhaltiges Schichtsilicat.

Nach einer weiter bevorzugten Ausführungsform wird ein Teil der Kationenaustauschkapazität (Cation Exchange Capacity, CEC) durch zwei- oder mehrwertige Kationen, insbesondere Erdalkalikationen wie calcium- und/oder Magnesiumionen, insbesondere Calciumionen gebildet. Verfahren zur Bestimmung der CEC sowie der einzelnen Ionenanteile sind nachstehend angegeben.

So wurde überraschend gefunden, dass die bei solchen Schichtsilicaten die im Stand der Technik auftretenden Probleme einer Viskositätssteigerung bzw. Gelbildung vermieden und lagerstabile hochkonzentrierte Slurries bereitgestellt werden können.

Nach einer weiter bevorzugten erfindungsgemäßen Ausführungsform handelt es sich bei dem mindestens einen Schichtsilicat um ein quellfähiges Schichtsilicat. Die Quellfähigkeit des mindestens einen Schichtsilicats liegt vorzugsweise bei mindestens 4 ml/2g. Die Quellfähigkeit kann wie im nachstehenden Methodenteil angegeben bestimmt werden. Dabei ist zu bemerken, dass z.B. auch (reine) calciumoder magnesiumhaltige Schichtsilicate quellfähig sind. Durch Austausch von zweiwertigen Zwischenschichtkationen gegen einwertige Kationen quillt das Schichtsilicat in wässrigen Suspensionen oder Slurries auf.

Es können auch zwei oder mehr Schichtsilicate für die Slurry bzw. die Aufschlämmung verwendet werden. Die Ausdrücke "Slurry" und "Aufschlämmung" werden im Rahmen der vorliegenden Erfindung breit und gleichbedeutend verstanden und sollen beide jegliche Dispersion oder Suspension mindestens eines Schichtsilicats in einem flüssigen Medium umfassen.

Im Rahmen der vorliegenden Erfindung wurde nach einem ersten Aspekt gefunden, dass durch den Einsatz von mindestens einem Polyethylenglycol mit recht niedrigem Molekulargewicht wie hierin beschrieben eine hoch konzentrierte und in hohem Masse lagerstabile Aufschlämmung bzw. Slurry des mindestens einen Schichtsilicats erhalten werden kann.

Wie vorstehend erwähnt werde vorzugsweise den Komponenten a), b) und c) keine einwertige Metallkationen (oder Ammoniumionen) enthaltende Komponenten bei der Herstellung der (konzentrierten) Slurry zugesetzt. Vorzugsweise enthält auch das wässrige Suspensionsmedium (Komponente b)) keine einwertigen Metallkationen (oder Ammoniumionen). Gleiches gilt vorzugsweise für die Dispergierhilfe selbst (Komponente c)). Es wurde überraschend festgestellt, dass dadurch ein starkes Quellen und Gelieren des mindestens einen Schichtsilicats vermieden werden kann.

Vorteilhafterweise werden mit der erfindungsgemäßen Slurry bzw. der Aufschlämmung Schichtsilicate wie Bentonite in hoch konzentrierter wässeriger Dispersion lagerstabil bereitgestellt, wobei die Dispersionen noch pumpfähig sind und das Viskositätsverhalten im Zeitraum von Tagen und Wochen lagerstabil bleibt.

Im Rahmen der Erfindung wurde auch gefunden, dass die Slurries besonders vorteilhafte (geringe) Viskositäten und eine hohe Lagerstabilität aufweisen, wenn der pH-Wert der Slurry zwischen etwa 4 und 10, insbesondere zwischen etwa 5,5 und 9, weiter bevorzugt zwischen etwa 6 und 9, insbesondere bevorzugt zwischen etwa 6,5 und 8,5 liegt. Soweit dieser pH-Wert sich nicht ohne weiteres durch Aufschlämmen des mindestens ein Schichtsilicats in dem wässrigen Suspensionsmedium, gegebenenfalls nach Zugabe der Dispergierhilfe (Komponente c)) ergibt, kann die Einstellung der vorstehenden bevorzugten pH-Bereiche durch die Zugabe mindestens einer Säure erfolgen. Hierbei können im Prinzip beliebige anorganische oder organische Säuren eingesetzt werden. Insbesondere können, ohne Beschränkung hierauf, Mineralsäuren wie z.B. Salzsäure, Schwefelsäure, Phosphorsäure oder Salpetersäure eingesetzt werden. Unter den organischen Säuren können beispielsweise Zitronensäure, Oxalsäure, Ameisensäure, Essigsäure und dergleichen genannt werden. Besonders bevorzugt wird Salzsäure verwendet.

Nach einer bevorzugten erfindungsgemäßen Ausführungsform werden solche Säuren verwendet, deren Anionen schlecht oder gar nicht komplexierend auf $Ca^{2+}$ oder $Mg^{2+}$ wirken. Dadurch kann ein Herauslösen von $Ca^{2+}$ oder $Mg^{2+}$ aus dem Schichtsilicat und somit eine Aktivierung bzw. Verdickung in der Slurry weiter minimiert werden.

Erfindungsgemäß wird weiterhin bevorzugt, dass, soweit eine Säurezugabe erfolgt, die Säure zur Einstellung des vorgesehenen pH-Wertes in dem wässrigem Suspensionsmedium vorgelegt wird, und anschließend die Zugabe des mindestens einen Schichtsilicats erfolgt.

Nach einer bevorzugten erfindungsgemäßen Ausführungsform weist die Slurry bzw. Aufschlämmung einen Gehalt an einwertigen Metallkationen (und Ammoniumionen) von weniger als etwa 0,5 Gew.-%, insbesondere weniger als 0,1 Gew.-%, bevorzugt weniger als 0,05 Gew.-%, weiter bevorzugt weniger als 0,01 Gew.-% auf, wobei hier der Ionengehalt des mindestens einen Schichtsilicats nicht einberechnet ist. Es wurde überraschend gefunden, dass durch einen solchen (geringen) Gehalt an einwertigen Metallkationen (und Ammoniumionen) eine niedrige Viskosität bei hohen Schichtsilicatkonzentrationen und eine besonders gute Lagerstabilität ermöglicht werden. Nach einer besonders bevorzugten Ausführungsform enthält die erfindungsgemäße Slurry bzw. Aufschlämmung neben der Komponente a) keine einwertigen Metallkationen (und Ammoniumionen) enthaltende Komponente, wobei übliche Verunreinigungen mit den vorstehenden Kationen, insbesondere Natriumionen in handelsüblichen Produkten, die erfindungsgemäß als Dispergierhilfe (Komponente c)) eingesetzt werden, nicht berücksichtigt sind. Nach einer weiteren bevorzugten Ausführungsform der vorliegenden Erfindung hat sich herausgestellt, dass die erfindungsgemäß eingesetzten Dispergierhilfen besonders günstige Ergebnisse liefern, wenn der Anteil zweiwertiger Kationen an der CEC des mindestens einen Schichtsilicats bei mindestens 35%, insbesondere bei mindestens 40% liegt.

Weiterhin wird erfindungsgemäß bevorzugt, dass es sich bei den zweiwertigen Kationen des mindestens einen Schichtsilicats um Calcium- und/oder Magnesiumionen handelt. Weiterhin wird bevorzugt, dass der Anteil an einwertigen Metallkationen (und Ammoniumionen), insbesondere Natriumionen an der CEC des mindestens einen Schichtsilicats weniger als etwa 65% beträgt.

Nach noch einer weiteren bevorzugten erfindungsgemäßen Ausführungsform liegt die CEC des mindestens einen Schichtsilicats bei mehr als 70 meq/100 g, vorzugsweise bei mindestens 75 meq/100 g. Ein Verfahren zur Bestimmung zur CEC ist nachstehend angegeben.

Erfindungsgemäß lassen sich hoch konzentrierte Slurries des mindestens einen Schichtsilicats herstellen. Dabei liegt der Gehalt der Slurry an dem mindestens einen Schichtsilicat vorzugsweise bei mehr als 10 Gew.-%, insbesondere bei mehr als 15 Gew.-%, weiter bevorzugt bei mehr als 20 Gew.-%, noch weiter bevorzugt bei mehr als 30 Gew.-%, insbesondere bevorzugt bei mehr als 40 Gew.-%.

Als wässriges Suspensionsmedium wird erfindungsgemäß besonders bevorzugt Wasser verwendet. Denkbar sind jedoch auch andere wässrige Suspensionsmedien, wie beispielsweise wässrig-alkoholische Lösung oder eine glycolhaltige wässrige Lösung.

Nach einem Aspekt der vorliegenden Erfindung wird mindestens ein Polyethylenglycol (Polyglycol) mit relativ niedrigem mittleren Molekulargewicht als Dispergierhilfe eingesetzt. So wurde überraschend gefunden, dass bei Verwendung solcher Polyethylenglycole mit relativ niedrigem mittleren Molekulargewicht Slurries mit hohem Gehalt (10 Gew.-% oder mehr) an Schichtsilicat erhalten werden können, die die Probleme einer Viskositätssteigerung bzw. Gelbildung vermeiden und lagerstabile hochkonzentrierte Slurries ermöglichen. Dies ist mit Polyethylenglycolen mit wesentlich höherem mittlerem Molekulargewicht, z.B. über 100.000, die im Stand der Technik als Flockungsmittel (und gerade nicht als Dispergiermittel) verwendet werden, nicht möglich. Solche Flockungsmittel werden eingesetzt, um über eine sogenannte "Überbrückungsflockung" einzelne Schichtsilicatteilchen zu verbinden und erhöhen somit die Viskosität. Nach einer besonders bevorzugten erfindungsgemäßen Ausführungsform wird daher mindestens ein Polyethylenglycol mit einem mittleren Molekulargewicht von weniger als etwa 80.000, insbesondere weniger als etwa 70.000, insbesondere zwischen etwa 200 und etwa 50.000, vorzugsweise zwischen etwa 2.000 und 20.000, weiter bevorzugt zwischen etwa 4.000 und 15.000, weiter bevorzugt zwischen etwa 4.000 und 12.000, verwendet.

Nach einer bevorzugten erfindungsgemäßen Ausführungsform wird das mindestens eine Polyethylenglycol in einer Menge zwischen etwa 0,1 bis 10 Gew.-%, insbesondere etwa 2 bis 8 Gew.-%, jeweils bezogen auf das mindestens eine Schichtsilicat, eingesetzt. In einzelnen Fällen können jedoch auch geringere oder größere Mengen sinnvoll sein.

Wie vorstehend bereits ausgeführt, wurde im Rahmen der vorliegenden Erfindung überraschend gefunden, dass im Gegensatz zu den im Stand der Technik beschriebenen (elektrolytischen) Dispergierhilfen und einwertige Metallkationen enthaltenden Zusammensetzungen die erfindungsgemäßen Dispergierhilfen besonders vorteilhaft zur Herstellung von hoch konzentrierten und lagerstabilen Slurries eingesetzt werden können.

Ein weiterer Aspekt der vorliegenden Erfindung betrifft ein Verfahren zur Herstellung einer Slurry bzw. Aufschlämmung wie hierin beschrieben. Dabei wird zunächst mindestens ein Schichtsilicat, vorzugsweise in Teilchenoder Pulverform, bereitgestellt. Weiterhin wird ein wässriges Suspensionsmedium wie vorstehend beschrieben, und eine Dispergierhilfe wie vorstehend beschrieben bereitgestellt. Die erfindungsgemäße Slurry wird dann durch Vermischen der vorstehenden Komponenten (Komponenten a) -c)) hergestellt. Dabei würde überraschend gefunden, dass sich besonders lagerstabile Slurries bzw. Aufschlämmungen herstellen lassen, wenn zunächst die mindestens eine Dispergierhilfe in dem wässrigen Suspensionsmedium vorgelegt wird und anschließend das mindestens eine Schichtsilicat zugegeben wird. Weiterhin wird es zum Erhalt besonders lagerstabiler Slurries bevorzugt, dass, soweit eine Säure zur Einstellung des vorstehend beschriebenen bevorzugten pH-Bereichs eingesetzt wird, diese in dem wässrigen Suspensionsmedium vorgelegt wird, bevor das mindestens eine Schichtsilicat zugegeben wird.

Ein weiterer Aspekt der vorliegenden Erfindung betrifft die Verwendung von mindestens einem Polyethylenglycol wie hierin beschrieben als Dispergierhilfe für mindestens ein Schichtsilicat, insbesondere mindestens ein calcium- und oder magnesiumhaltiges Schichtsilicat.

Ein weiterer Gegenstand der vorliegenden Erfindung ist die Verwendung der Slurries bzw. Aufschlämmungen, insbesondere mit einem Gehalt an Schichtsilicat von mindestens 10 Gew.-%. Diese sind insbesondere für Wasch- und Reinigungsmittel einsetzbar, wie z.B. das Einbringen des Bentonites in flüssige Waschmittelformulierungen oder flüssige Weichspülerformulierungen. Darüber hinaus ist in einer weiteren erfindungsgemäßen Verwendung der Slurries bzw. Aufschlämmungen für die Papieranwendungen einsetzbar, hierbei insbesondere auf dem Gebiet der Störstoffbekämpfung und der Retentionsmittel. Denkbar und von der vorliegenden Erfindung erfasst sind jedoch auch weitere Anwendungen der erfindungsgemäßen Slurry in anderen Gebieten, in denen der Einsatz hoch konzentrierter Schichtsilicatslurries vorteilhaft ist. In einer weiteren erfindungsgemäßen Verwendung werden die Slurries bzw. Aufschlämmungen auf allen Gebieten, in denen Schichtsilicate wie Bentonite als Sorptionsmittel bzw. Adsorbens oder Verdicker eingesetzt wird, ersetzt.

Die Erfindung wird nun anhand der nachstehenden nicht beschränkenden Beispiele näher erläutert.

Beispiele/Messmethoden

Bestimmung der Kationenaustauschkapazität (CEC)

Prinzip: Der Ton wird mit einem großen Überschuss an wässriger $NH_4Cl$-Lösung behandelt, ausgewaschen und die auf dem Ton verbliebene $NH_4^+$-Menge mittels Elementaranalyse bestimmt.

$$Me^+(Ton)^- + NH_4^+ - NH_4^+(Ton)^- + Me^+$$

$$(Me^+ = H^+, K^+, Na^+, 1/2\ Ca^{2+}, 1/2\ Mg^{2+}....)$$

Geräte: Sieb, 63 $\mu$m; Erlenmeyer-Schliffkolben, 300 ml; Analysenwaage; Membranfilternutsche, 400 ml; Cellulose-Nitrat-Filter, 0,15 $\mu$m (Fa. Sartorius); Trockenschrank; Rückflusskühler; Heizplatte; Destillationseinheit, VAPODEST-5 (Fa. Gerhardt, No. 6550); Messkolben, 250 ml; Flammen-AAS

Chemikalien: 2N $NF_4Cl$-Lösung; Neßlers-Reagens (Fa. Merck, Art.Nr. 9028); Borsäure-Lösung, 2 %-ig; Natronlauge, 32 %-ig; 0,1 N Salzsäure; NaCl-Lösung, 0,1 %-ig; KCl-Lösung, 0,1 %-ig.

Durchführung: 5 g Ton werden durch ein 63 $\mu$m-Sieb gesiebt und bei 110°C getrocknet. Danach werden genau 2 g auf der Analysenwaage in Differenzwägung in den Erlenmeyer-Schliffkolben eingewogen und mit 100 ml 2N $NH_4Cl$-Lösung versetzt. Die Suspension wird unter Rückfluss eine Stunde lang gekocht. Bei stark $CaCO_3$-haltigen Bentoniten kann es zu einer Ammoniak-Entwicklung kommen. In diesen Fällen muss solange $NH_4Cl$-Lösung zugegeben werden, bis kein Ammoniak-Geruch mehr wahrzunehmen ist. Eine zusätzliche Kontrolle kann mit einem feuchten Indikator-Papier durchgeführt werden. Nach einer Standzeit von ca. 16 h wird der $NH_4^+$-Bentonit über eine Membranfilternutsche abfiltriert und bis zur weitgehenden Ionenfreiheit mit vollentsalztem Wasser (ca. 800 ml) gewaschen. Der Nachweis der Ionenfreiheit des Waschwassers wird auf $NH_4^+$-Ionen mit dem dafür empfindlichen Neßlers-Reagens durchgeführt. Die Waschzahl kann je nach Tonart zwischen 30 Minuten und 3 Tagen variieren. Der ausgewaschene $NH_4^+$-Ton wird vom Filter abgenommen, bei 110°C 2 h lang getrocknet, gemahlen, gesiebt (63 $\mu$m-Sieb) und nochmals bei 110 °C 2 h lang getrocknet. Danach wird der $NH_4^+$-Gehalt des Tons mittels Elementaranalyse bestimmt.

Berechnung der CEC: Die CEC des Tons wurde in herkömmlicher Weise über den $NH_4^+$-Gehalt des $NH_4^+$-Tons, der über Elementaranalyse des N-Gehalts ermittelt wurde, bestimmt. Hierzu wurde das Gerät Vario EL 3 der Firma Elementar- Heraeus, Hanau, DE, nach den Angaben des Herstellers eingesetzt. Die Angaben erfolgen in mval/100 g Ton (meq/100g).

Beispiel: Stickstoff-Gehalt =-0,93 %;

Molekulargewicht: N = 14,00.67 g/mol

$$CEC = \frac{0,93 \times 1000}{14,0067} = 66,4\ mVal/100g$$

CEC = 66,4 meq/100 g $NH_4^+$-Bentonit

Bestimmung des Quellvolumens

Das Quellvolumen wird wie folgt bestimmt:

Ein kalibrierter 100 ml-Meßzylinder wird mit 100 ml dest. Wasser gefüllt. 2,0 g der zu messenden Substanz werden in Portionen von 0,1 bis 0,2 g langsam auf der Wasseroberfläche gegeben. Nach dem Absinken des Materials wird das nächste Quantum aufgegeben. Nach Beendigung der Zugabe wartet man 1 Stunde und liest dann das Volumen der aufgequollenen Substanz in ml/2g ab. Viskositätsmessungen

Im folgendenden durchgeführte Viskositätsmessungen wurden mit einem Brookfield Digital Viskosimeter Modell DV II (Brookfield, Stoughton, MA 02072, USA) durchgeführt. Die Angaben (z.B. in mPas) zu den verwendeten Spindeln und Umdrehungszahlen sind jeweils in den Beispielen angeführt.

Herstellung der Slurry

Hierzu wurde ein PENDRAULIK Rührer (FH Pendraulik Springe, D) eingesetzt. Die Additive wurden jeweils zunächst in das Wasser eingerührt. Der Bentonit wurde dann mit den Pendraulikrührer auf Stellung 1 (930 Upm) bis zu 5 min. lang eingerührt. 5 min. wurde dann auf Stellung 1,5 (15 Upm) nachgerührt. Die Slurries wurden hierbei normalerweise in 800 ml Bechergläsern hergestellt. Bei den Ansätzen von 500 ml wurden kleine Zahnscheiben (Durchmesser 40 mn) als Rührwerkzeug eingesetzt. Bei den Ansätzen von 5 1 wurde eine Dissolverecheibe mit 55 mm Durchmesser als Rührwerkzeug eingesetzt . Es wurde ein 10 1 Eimer verwendet.

Erfindungsgemäße Additive

Die Polyethylenglykole 1500, 4000, 6000, 20000 wurden von der Firma CLARIANT, Frankfurt unter dem Handelsnamen Polyglykol bezogen. Alternativ wurden auch Polyethylenglykole von der BASF eingesetzt, die unter dem Handelsnamen Pluriol vertrieben werden. Die Hersteller der einzelnen PEGs werden jeweils in den Beispielen angegeben.

Andere Additive und Chemikalien

Als typisches geeignetes protoniertes Acrylat wurde Sokalan CP 1OS von der Firma BASF AG Ludwigshafen eingesetzt. Dieses liegt als 40 Gewr.-%ige Lösung vor.
Salzsäure: 0,5m, Riedel del Haen oder Merck
Dispex® N40, A40: Dispergierhilfsmittel von Ciba, Grenzach (wässrige Lösungen werden so eingesetzt, wie vom Hersteller bezogen).

Beispiel 1

Für die Slurryherstellung wurde ein Bentonit (Bentonit 1) mit nachfolgenden Eigenschaften eingesetzt:

| Eigenschaft | Wert |
|---|---|
| Montmorillonitgehalt (Methylenblaumethode) | 75% |
| Nebenmineralgehalt (Röntgenmessungen) Quartz + Cristobalit Feldspat | < 5 Gew.-% < 12 Gew.-% |
| Kationenaustauschkapazität | 75 meq/100 g |
| Anteil von Na$^+$ an der CEC | 20% |

Es wurden zwei unterschiedliche Varianten des Bentonits 1 eingesetzt:

Tabelle A: Siebrückstände

| Eigenschaft | Variante 1 | Variante 2 |
|---|---|---|
| Trockensiebrückstand auf: 45 $\mu$m [Gew.-%] | < 0,3% | 14% |

(fortgesetzt)

| Eigenschaft | Variante 1 | Variante 2 |
|---|---|---|
| Nasssiebrückstand auf: 45 $\mu$m [Gew.-%] | < 0,3% | 9,5% |

Aus den o.g. Bentoniten wurden jeweils Slurries mit 25 Gew.-% Feststoff bezogen auf trockenen Bentonit (bestimmt durch Wassergehaltsbestimmung nach Trocknung bis zur Gewichtskonstanz bei 130°C) hergestellt und bezüglich ihrer Viskosität charakterisiert.

Die Variante 2 (andere Teilchenfeinheit) zeigte keine großen Unterschiede in den erhaltenen Viskositäten.

Tabelle 1:

| 25 Gew.-% Bentonit 1, Variante 1, mit 5% Polyglykol 4000 | |
|---|---|
| Viskositätsmessung (nach Herstellung der Slurry) | |
| Spindel 3 | |
| 5 Upm | 3000 |
| 50 upm | 680 |
| Spindel 5 | |
| 5 upm | 3900 |
| 20 upm | 1480 |
| 100 upm | 600 |
| pH-Wert | 8,4 |

Wie die Tabelle 1 zeigt, eignete sich Polyglykol 4000, um konzentrierte Slurries herzustellen.

In einem weiteren Versuch wurde daher der pH-Wert der Slurry mit Salzsäure auf 7 eingestellt. Die Säure wurde nach dem Lösen des Polyethylenglykols vor der Zugabe des Bentonits vorgelegt. Tabelle 2a:

| 25 Gew.-% Bentonit 1, Variante 1, mit 5% Polyglykol 4000, pH-Wert mit Salzsäure auf 7 eingestellt | | |
|---|---|---|
| Viskositätsmessung | Neu | Nach 1 Tag |
| Spindel 3 | | |
| 5 Upm | 3220 | 7740 |
| 50 upm | 390 | 900 |
| Spindel 5 | | |
| 5 upm | 3440 | 8560 |
| 20 upm | 940 | 2220 |
| 100 upm | 240 | 520 |
| pH-Wert | 7,4 | 7,5 |

Zur Erzielung einer besonders guten Lagerfähigkeit der Slurries, war es vorteilhaft, die Salzsäure vorzulegen, und nicht nachträglich zuzugeben.

Zum Vergleich wurden Messungen mit 2 handelsüblichen Dispergiermitteln der Firma CIBA (Grenzach), den Produkten Dispex® N40 und A40 durchgeführt.

Tabelle 3:

| 25 Gew.% Bentonit 1, Variante 1, mit 5% Dispex® N40 bzw. 5% A40. als Additiv | | | | |
|---|---|---|---|---|
| Viskositätsmessung | neu | | Nach 1 Tag | |
| Spindel 3 | N 40 | A 40 | N 40 | A 40 |
| 5 Upm | 920 | 220 | n.m. | n.m. |
| 50 upm | 574 | 224 | n.m. | n.m. |
| Spindel 5 | | | | |
| 5 upm | 1120 | 240 | n.m. | n.m. |
| 20 upm | 820 | 260 | n.m. | n.m. |
| 100 upm | 692 | 270 | n.m. | n.m. |
| pH-Wert | 8,1 | 8,0 | n.m. | n.m. |
| n.m.= nicht messbar | | | | |

Bei diesen Additiven wurde die Konzentration zwischen 0,2 und 5% variiert. In allen Fällen wurden zunächst niedrig viskose Slurries erhalten, die jedoch nach 1 Tag gelierten. Exemplarisch zeigt die Tabelle 3 die Werte für die Slurries mit 5% Additiv.

Beispiel 2

Mit dem Bentonit 1 gemäß der Variante 1 aus Beispiel 1 wurde bei einem pH-Wert von 7 der Einfluss des Molekulargewichts des Polyethylenglykols auf die Viskosität untersucht. Dabei wurde das Molekulargewicht zwischen 600 und 20000 g/Mol variiert. Tabelle 4:

| Slurries mit 25 Gew.% Bentonit 1, Variante 1, mit Pluriol 600 (BASF) als Additiv | | | |
|---|---|---|---|
| Viskositätsmessung | Neu | Nach 1 Tag | Nach 14 Tagen |
| Spindel 3 | | | |
| 5 Upm | 4240 | 10300 | 16800 |
| 50 upm | 474 | 1060 | 1680 |
| Spindel 5 | | | |
| 5 upm | 4800 | 10100 | 17000 |
| 20 upm | 1260 | 2560 | 4360 |
| 100 upm | 296 | 588 | - |
| pH-Wert | 6,9 | 7,4 | - |

Tabelle 5:

| gleiches System wie in Tabelle 4: mit 5% Polyglykol 1500 (Clariant) als Additiv | | | |
|---|---|---|---|
| Viskositätsmessung | neu | Nach 1 Tag | Nach 14 Tagen |
| Spindel 3 | | | |
| 5 Upm | 3760 | 8400 | 14200 |
| 50 upm | 418 | 900 | 1510 |
| Spindel 5 | | | |
| 5 upm | 4080 | 8320 | 14200 |

# EP 1 904 588 B1

(fortgesetzt)

| Spindel 5 | | | |
|---|---|---|---|
| 20 upm | 1100 | 2100 | 3780 |
| 100 upm | 252 | 504 | 820 |
| pH-Wert | 6,9 | 7,3 | - |

Tabelle 6:

| gleiches System wie in Tabelle 4: mit 5% Polyglykol 6000 (Clariant) als Additiv | | | |
|---|---|---|---|
| **Viskositätsmessung** | **neu** | **Nach 1 Tag** | **Nach 14 Tagen** |
| Spindel 3 | | | |
| 5 Upm | 3240 | 6440 | 10200 |
| 50 upm | 370 | 710 | 1140 |
| Spindel 5 | | | |
| 5 upm | 3440 | 6480 | 10200 |
| 20 upm | 940 | 1740 | 2480 |
| 100 upm | 224 | 408 | 600 |
| pH-Wert | 6,7 | 7,3 | - |

Tabelle 7:

| gleiches System wie in Tabelle 4: mit 5% Polyglykol 20000 (Clariant) als Additiv | | | |
|---|---|---|---|
| **Viskositätsmessung** | **neu** | **Nach 1 Tag** | **Nach 14 Tagen** |
| Spindel 3 | | | |
| 5 Upm | 3180 | 5680 | 9420 |
| 50 upm | 388 | 694 | 984 |
| Spindel 5 | | | |
| 5 upm | 3360 | 5920 | 9120 |
| 20 upm | 960 | 1600 | 2400 |
| 100 upm | 236 | 416 | 556 |
| pH-Wert | 6,8 | 7,3 | - |

Wie die vorangegangenen Tabellen 4 bis 7 zeigen, ließen sich die Polyethylenglykole (PEGs) im ganzen Molekulargewichtsbereich, der vorher untersucht wurde, zur Stabilisation des untersuchten Bentonits einsetzen. Der Vergleich der Viskositäten als Funktion des Molekulargewichts zeigte, dass die höheren Molekulargewichte auch nach dem Lagern der Slurries zu niedrigen Viskositäten führen. Die längeren Moleküle mit dem größeren durchschnittlichen Molekulargewicht wurden vermutlich stärker an die Oberfläche gebunden und intercalierten weniger stark mit der Zeit zwischen die Schichten.

Beispiel 3

Man setzte Bentonit gemäß Beispiel 1 ein, der durch eine Aktivierung mit 4,3% Soda hergestellt wurde (Bentonit 2). Hierdurch wurden erfindungsgemäß alle $Mg^{2+}$ und $Ca^{2+}$ Ionen des Bentonit 1 durch Natriumionen ersetzt.
Es wurde gefunden, dass sich nach dem erfindungsgemäßen Verfahren dieser Bentonit 2 ebenfalls mit Polyethylenglykolen dispergieren ließ. Allerdings stieg die erforderliche Zusatzmenge infolge der zur Verfügung stehenden höheren spezifischen Oberfläche in der Dispersion auf ca. 10%. Die Ergebnisse de Viskositätsmessungen an den frisch hergestellten Slurries sind in Tabelle 8 dargestellt, wobei nach einigen Tagen ein starker Viskositätsanstieg zu beobachten war.

Tabelle 8:

| Charakteristische Viskositätsdaten von Slurries aus Bentonit 2 (25 Gew.%) mit 10% Polyglykol 4000 | |
| --- | --- |
| **Viskositätsmessung** | |
| Spindel 3 | |
| 5 Upm | 4280 |
| 50 Upm | 706 |
| Spindel 5 | |
| 5 Upm | 5280 |
| 20 Upm | 1540 |
| 100 Upm | 464 |
| pH-Wert | 9.8 |

Beispiel 4 (Referenbeispiel)

Der nach Beispiel 1 hergestellte Bentonit, Variante 1, wurde in einer weiteren erfindungsgemäßen Formulierung mit einem sauren Polyacrylat, Sokalan® CP 10 S der Firma BASF dispergiert. Auch mit diesem Additiv ließen sich durch Zusätze im Prozentbereich z.B. 0,5 bis 5%, lagerstabile Slurries mit einer Bentonitkonzentration von 25 Gew.-% herstellen.

Im folgenden sind exemplarisch die Brookfield-Viskositäten mit Spindel 5 bei 100 Upm dargestellt sowie die kompletten Viskositätsdaten bei 1% Zusatz. (Angaben der Zusätze bezogen auf die wässrige Lösung Sokalan CP 10S wie kommerziell erhalten). Tabelle 9:

| Viskositäten bei 25% Bentonit 1 und 1 und 2% Sokalan CP10S (Spindel 5 100 upm) | | |
| --- | --- | --- |
| Konzentration Sokalan CP 10 S Gew.% bezogen auf Bentonit | sofort | Nach 1 Tag |
| 2,5 | 44 | 156 |
| 1 | 48 | 328 |

Tabelle 10:

| Komplette Viskositätsdaten der Slurry mit 1 Gew.% Sokalan CP 10S | | |
| --- | --- | --- |
| **Viskositätsmessung** | **neu** | **Nach 1 Tag** |
| Spindel 3 | | |
| 5 Upm | 0 | 300 |
| 50 upm | 52 | 326 |
| Spindel 5 | | |
| 5 upm | 0 | 320 |
| 20 upm | 0 | 300 |
| 100 upm | 48 | 328 |
| pH-Wert | 6,6 | 7 |

Zum Vergleich wurde das entsprechende Na-Salz (Sokalan® CP 10) als Additiv getestet. Zwar waren hier direkt nach der Präparation ähnlich niedrige Viskositäten bestimmbar, wie für den Einsatz von Sokalan® CP 10S, jedoch gelierte die Slurry nach einem Tag zu einem nicht mehr gießfähigen Gel.

Tabelle 11:

| Viskositätsdaten zu einem Ansatz analog Tabellen 9 und 10, wobei jedoch Sokalan® CP 10 (Na-Salz) statt Sokalan® CP 10 S verwendet wurde. | | |
|---|---|---|
| **Viskositätemessung** | **Neu** | **Nach 1 Tag** |
| Spindel 3 | | Keine Messung möglich wegen Gelbildung |
| 5 Upm | 120 | |
| 50 Upm | 140 | |
| Spindel 5 | | |
| 5 Upm | 160 | |
| 20 Upm | 160 | |
| 100 Upm | 156 | |
| pH-wert | 8,2 | |

Diese Daten zeigen, dass die eingesetzten Polyacrylate in der Säureform (protonierten Form) erhebliche Vorteile aufwiesen. Der Einsatz einer Natriumform führt über eine Na-Aktivierung des Bentonites zu einer Verdickung. Überraschenderweise trat dieser Effekt bei der Säureform nicht auf.

Beispiel 5

Es wurden zwei weitere Bentonite eingesetzt, deren unterschiedliche Eigenschaften nachstehend aufgelistet sind:

Tabelle 12:

| Eigenschaften der beiden eingesetzten Bentonite | | | |
|---|---|---|---|
| Eigenschaft | Einheit | Bentonit 3 | Bentonit 4 |
| Montmorillonitgehalt (Methylenblaumethode) | [%] | 94 | 100 |
| Nebenmineralgehalte (Röritgenmessungen) Quarz und Cristobalite Calcit Feldspat | [Gew.-%] | < 3 - - | 1 1 - |
| pH-Wert bei 5 Gew.-% | | 8,5 | 9 |
| Kationenaustauschkapazität | Meq/100g | 95 | 110 |
| Anteil von Na an der Gesamtkationenaustauschkapazität | [%] | 56 | 32 |
| Siebrückstände | | | |
| Trockensiebrückstand auf 45 $\mu$m | [Gew.-%] | 2,5 | 9,8 |
| Nasssiebrückstand auf 45 $\mu$m | [Gew.-%] | 2,0 | 2,5 |

Beispiel 6 (Referenzbeispiel)

Es wurde Bentonit 3 aus Beispiel 5 im Hinblick auf die Herstellung von hochkonzentrierten Slurries untersucht:

Tabelle 13 :

| Viskositätsdaten des Bentonit 3 mit unterschiedlichen Gehalten an Additiven (Polyglykolen (PEG) und Sokalan® CP 10 S | | | | | |
|---|---|---|---|---|---|
| Additiv | Gehalt [Gew.-%] | pH-Wert | Lagerzeit | Brookfield Viskosität Spindel,5 | |
| | | | | 20 Upm | 100 Upm |
| Polyglykol | 2,5 | 8,1 | 0 | 2700 | 700 |
| | | | 1 Tag | 6650 | 1670 |
| | 5 | 8,2 | 0 | 2460 | 676 |
| | | | 1 Tag | 5600 | 1520 |
| Sokolan CP 10S | 1 | 5,7 | 0 | 300 | 316 |
| | | | 1 Tag | 1640 | 1980 |
| | 2,5 | 4,7 | 0 | 380 | 220 |
| | | | 1 Tag | 1640 | 960 |

Die Daten der Tabelle 13 zeigten, ließ sich mit den erfindungsgemäßen Additiven der Bentonit 3 als hochkonzentrierter Slurry bzw. Aufschlämmung formulieren. Trotz der unterschiedlichen prozentualen Anteile an Polyethylenglykol bzw. an dem Polyacrylat zeigten die Versuche eine weiterhin vorhandene Lagerstabilität und keine Gelierung der Aufschlämmungen.

Beispiel 7 (Referenzbeispiel)

Als weitere Variante wurde die Slurry-Herztellung mit Bentonit 4 aus Beispiel 5 untersucht. Dieser wurde ebenso in einer Konzentration von 25 Gew.-% bezogen auf die Trockensubstanz eingesetzt.

Tabelle 14:

| Viskositätsdaten des Bentonit 4 mit unterschiedlichen Gehalten an Additiven, Polyglykolen (PEG) und Sokalan® CP 10 S | | | | | |
|---|---|---|---|---|---|
| **Additiv** | **Gehalt [Gew.-%]** | **pH-Wert** | **Lagerzeit** | **Brookfield Viskosität Spindel 5** | |
| | | | | **20 upm** | **100 upm** |
| Polyglykol 4000 + Salzsäure | 5 + 16% | 7,0 | 0 | 3540 | 832 |
| | | 7,5 | 1 Tag | 5400 | 1210 |
| Sokalan CP 10S | 1 | 7,2 | 0 | 780 | 480 |
| | | | 1 Tag | - | - |
| | 2,5 | 6,2 | 0 | 440 | 364 |
| | | | 1 Tag | 6200 | 2400 |

Die Daten der Tabelle 14 zeigen, dass die erfindungsgemäßen Aufschlämmungen ihre positiven Eigenschaften auch bei Verwendung eines weiteren Bentonits (Bentonit 4) beibehielten. Zur Erzielung von guten und stabilen Viskositäten wurde der pH-Wert bevorzugt auf Werte < 8 eingestellt.

Beispiel 8

Als weitere Variante wurde versucht, gemäß Beispiel 1 (siehe auch Tabelle 1) eine Slurry herzustellen, wobei jedoch Polyethylenglycole mit einem mittleren Molekulargewicht von mehr als 100.000 verwendet wurden. Beispielsweise wurden PEGs mit einem mittleren Molekulargewicht von 400.000 (polyol™ WSR N 3000 und Polyox™ WSR 301, Dow Chemical Company) eingesetzt. Hierbei konnte keine gießfähige Slurry erhalten werden, sondern lediglich eine feste Masse. Das lässt sich dadurch erklären, dass hochmolekulare PEGs durch Überbrückungsflockung einzelne Bentonitteilchen verbindet und somit nicht durch sterische Stabilisierung viskositätsreduzierend wirken kann.

**Patentansprüche**

1.  Slurry bzw. Aufschlämmung, enthaltend

    a) mindestens 10 Gew.-% mindestens eines Schichtsilicats ausgewählt aus der Gruppe der Smektite ausgewählt aus der Gruppe bestehend aus Montmorillonit wie Bentonit und Fuller's Earth, Hectorit, Antigorit, Nontronit, Beidellit, Saponit, der Gruppe der Vermiculite, der Gruppe der Illite oder Glimmer sowie Sepiolith, Attapulgit (Palygorskit), Stevensit oder Chlorit, bezogen auf das Gesamtgewicht des Slurry bzw. der Aufschlämmung;
    b) ein wässriges Suspensionsmedium;
    c) eine Dispergierhilfe, ausgewählt aus mindestens einem Polyethylenglycol mit einem mittleren Molekulargewicht von weniger als 90.000.

2.  Slurry nach Anspruch 1, **dadurch gekennzeichnet, dass** das mindestens eine Polyethylenglycol ein mittleres Molekulargewicht von weniger als etwa 80.000, insbesondere weniger als etwa 70.000, insbesondere zwischen etwa 200 und etwa 50.000, vorzugsweise zwischen etwa 2.000 und 20.000, weiter bevorzugt zwischen etwa 4.000 und 15.000 aufweist.

3.  Slurry nach einem der vorstehenden Ansprüche, **dadurch gekennzeichnet, dass** der Anteil zweiwertiger Kationen an der CEC des mindestens einen Schichtsilicats bei mindestens 30 %, insbesondere mindestens 40 % liegt.

4.  Slurry nach einem der vorstehenden Ansprüche, **dadurch gekennzeichnet, dass** die Slurry bzw. Aufschlämmung neben den Komponenten a), b) und c) keine einwertige Metallkationen enthaltende Komponente aufweist.

5.  Slurry nach einem der vorstehenden Ansprüche, **dadurch gekennzeichnet, dass** der pH-Wert der Slurry zwischen etwa 5 und 10, insbesondere zwischen etwa 6 und 9, weiter bevorzugt zwischen etwa 6,5 und 8,5 liegt.

6.  Slurry nach einem der vorhergehenden Ansprüche, **dadurch gekennzeichnet, dass** der pH-Wert gemäß Anspruch 5 durch Zugabe mit mindestens einer Säure eingestellt wird.

7.  Slurry nach einem der vorhergehenden Ansprüche, **dadurch gekennzeichnet, dass** es sich bei dem mindestens einen Schichtsilicat um ein quellfähiges Schichtsilicat handelt.

8.  Slurry nach einem der vorhergehenden Ansprüche, **dadurch gekennzeichnet, dass** es sich bei dem mindestens einen Schichtsilicat um ein calciumhaltiges Schichtsilicat handelt.

9.  Slurry nach einem der vorhergehenden Ansprüche, **dadurch gekennzeichnet, dass** es sich bei dem mindestens einen Schichtsilicat um ein smektitisches Schichtsilicat handelt.

10. Slurry nach einem der vorstehenden Ansprüche, **dadurch gekennzeichnet, dass** der Gehalt an einwertigen Metallionen und Ammoniumionen, insbesondere der Natrium-Gehalt der Slurry bei kleiner 0,5 Gew.-%, insbesondere kleiner 0,1 Gew.-%, bevorzugt kleiner 0,05 Gew.-%, weiter bevorzugt kleiner 0,01 Gew.-% liegt, wobei der Gehalt des mindestens einen Schichtsilicats an einwertigen Metallionen und Ammoniumionen, insbesondere Natriumionen nicht einberechnet ist.

11. Slurry nach einem der vorstehenden Ansprüche, **dadurch gekennzeichnet, dass** es sich bei den zweiwertigen Kationen im mindestens einen Schichtsilicat um Calcium- und/oder Magnesiumionen handelt.

12. Slurry nach einem der vorstehenden Ansprüche, **dadurch gekennzeichnet, dass** der Anteil der einwertigen Kationen, insbesondere der Natriumionen an der CEC des mindestens einen Schichtsilicats weniger als 65 % beträgt.

13. Slurry nach einem der vorstehenden Ansprüche, **dadurch gekennzeichnet, dass** die CEC des mindestens einen Schichtsilikats bei mehr als 70 meq/100 g, vorzugsweise bei größer gleich 75 meq/100 g liegt.

14. Slurry nach einem der vorstehenden Ansprüche, **dadurch gekennzeichnet, dass** der Gehalt der Slurry an dem mindestens einen Schichtsilicat bei mehr als 15 Gew.-%, insbesondere mehr als 20 Gew.-%, weiter bevorzugt mehr als 30 Gew.-%, insbesondere bevorzugt mehr als 40 Gew.-% liegt.

15. Slurry nach einem der vorstehenden Ansprüche, **dadurch gekennzeichnet, dass** es sich bei dem wässrigen Suspensionsmedium um Wasser, eine wässrig-alkoholische Lösung oder eine glycolhaltige wässrige Lösung handelt.

**16.** Slurry nach einem der vorstehenden Ansprüche, **dadurch gekennzeichnet, dass** das mindestens eine Polyethylenglycol in einer Menge zwischen etwa 0,1 bis 10 Gew.-%, bezogen auf das mindestens eine Schichtsilicat, insbesondere etwa 2 bis 8 Gew.-% eingesetzt wird.

**17.** Verfahren zur Herstellung einer Slurry bzw. Aufschlämmung nach einem der vorstehenden Ansprüche, **dadurch gekennzeichnet, dass** zunächst die mindestens eine Dispergierhilfe in dem wässrigen Suspensionsmedium ggf. unter Zugabe einer Säure zur Einstellung des pH-Wertes vorgelegt wird, und anschließend das mindestens eine Schichtsilicat zugegeben wird.

**18.** Verwendung von mindestens einem Polyethylenglycol mit einem mittleren Molekulargewicht von weniger als 90.000 als Dispergierhilfe für mindestens ein Schichtsilicat bei der Herstellung einer Slurry bzw. Aufschlämmung, die mindestens 10 Gew.-% mindestens eines Schichtsilicats enthält.

**19.** Verwendung gemäß Anspruch 18, **dadurch gekennzeichnet, dass** der Anteil zweiwertiger Kationen an der CEC des mindestens einen Schichtsilicats bei mindestens 30 %, insbesondere mindestens 40 % liegt.

**20.** Verwendung gemäß Anspruch 18 oder 19, **dadurch gekennzeichnet, dass** es sich bei dem mindestens einen Schichtsilicat um ein quellfähiges Schichtsilicat handelt.

**21.** Verwendung gemäß einem der Ansprüche 18 bis 20, **dadurch gekennzeichnet, dass** es sich bei dem mindestens einen Schichtsilicat um ein calciumhaltiges Schichtsilicat handelt.

**22.** Verwendung der Slurry bzw. Aufschlämmung nach einem der Ansprüche 1 bis 16 in flüssigen Wasch- oder Reinigungsmittelzusammensetzungen, insbesondere flüssigen Waschmittel- und Weichspülerzusammensetzungen.

**23.** Verwendung der Slurry bzw. Aufschlämmung nach einem der Ansprüche 1 bis 16 auf dem Gebiet der Papierindustrie, insbesondere bei der Störstoffbekämpfung oder in Retentionsmitteln, oder als Verdicker oder Adsorbens.

**Claims**

**1.** A slurry comprising

a) at least 10% by weight of at least one layered silicate selected from the group of smectites consisting of montmorillonite such as bentonite and Fuller's earth, hectorite, antigorite, nontronite, beidellite, saponite, the group of vermiculites, the group of illites, or mica, as well as sepiolite, attapulgite (palygorskite), stevensite or chlorite, based on the total weight of the slurry;
b) an aqueous suspension medium; and
c) a dispersing aid selected from at least one polyethylene glycol having a mean molecular weight of less than 90,000.

**2.** The slurry according to claim 1, **characterized in that** the at least one polyethylene glycol has a mean molecular weight of less than about 80,000, in particular of less than about 70,000, in particular between about 200 and about 50,000, preferably between about 2,000 and 20,000, more preferably between about 4,000 and 15,000.

**3.** The slurry according to one of the preceding claims, **characterized in that** the proportion of divalent cations in the CEC of the at least one layered silicate is at least 30%, in particular at least 40 %.

**4.** The slurry according to one of the preceding claims, **characterized in that** the slurry, apart from components a), b), and c), does not have any component comprising monovalent metal cations.

**5.** The slurry according to one of the preceding claims, **characterized in that** the pH value of the slurry is between about 5 and 10, in particular between about 6 and 9, more preferably between about 6.5 and 8.5.

**6.** The slurry according to one of the preceding claims, **characterized in that** the pH value according to claim 5 is adjusted by addition of at least one acid.

7. The slurry according to one of the preceding claims, **characterized in that** the at least one layered silicate is a swellable layered silicate.

8. The slurry according to one of the preceding claims, **characterized in that** the at least one layered silicate is a calcium-containing layered silicate.

9. The slurry according to one of the preceding claims, **characterized in that** the at least one layered silicate is a smectitic layered silicate.

10. The slurry according to one of the preceding claims, **characterized in that** the content of monovalent metal ions and ammonium ions, in particular the sodium content of the slurry, is less than 0.5% by weight, in particular less than 0.1 % by weight, preferably less than 0.05 % by weight, more preferably less than 0.01 % weight, not including the content of the at least one layered silicate of monovalent metal ions and ammonium ions, in particular sodium ions.

11. The slurry according to one of the preceding claims, **characterized in that** the divalent cations in the at least one layered silicate are calcium and/or magnesium ions.

12. The slurry according to one of the preceding claims, **characterized in that** the proportion of monovalent cations, in particular of the sodium ions, in the CEC of the at least one layered silicate is less than 65%.

13. The slurry according to one of the preceding claims, **characterized in that** the CEC of the at least one layered silicate is more than 70 meq/100 g, preferably greater than or equal to 75 meq/100 g.

14. The slurry according to one of the preceding claims, **characterized in that** the content of the slurry of the at least one layered silicate is more than 15 % by weight, in particular more than 20 % by weight, more preferably more than 30 % by weight, particularly preferably more than 40 % by weight.

15. The slurry according to one of the preceding claims, **characterized in that** the aqueous suspension medium is water, an aqueous alcoholic solution or a glycol-containing aqueous solution.

16. The slurry according to one of the preceding claims, **characterized in that** the at least one polyethylene glycol is used in an amount between about 0.1 to 10% by weight, based on the at least one layered silicate, in particular about 2 to 8 % by weight.

17. A process for producing a slurry according to one of the preceding claims, **characterized in that** initially at least one dispersing aid is charged in an aqueous suspension medium, optionally with addition of an acid to adjust the pH value, and then at least one layered silicate is added.

18. Use of at least one polyethylene glycol having a mean molecular weight of less than 90.000 as dispersing aid for at least one layered silicate in the production of a slurry which comprises at least 10 % by weight of at least one layered silicate.

19. The use according to claim 18, **characterized in that** the proportion of divalent cations in the CEC of the at least one layered silicate is at least 30 %, in particular at least 40 %.

20. The use according to claim 18 or 19, **characterized in that** the at least one layered silicate is a swellable layered silicate.

21. The use according to anyone of claims 18 to 20, **characterized in that** the at least one layered silicate is a calcium-containing layered silicate.

22. The use of the slurry according to anyone of claims 1 to 16 in liquid washing or cleaning compositions, in particular liquid washing compositions and fabric softener compositions.

23. The use of the slurry according to anyone of claims 1 to 16 in the field of the paper industry, in particular in contaminant control, or in retention aids, or as a thickener or adsorbent.

**Revendications**

1. Barbotine ou suspension contenant

a) au moins 10 % en poids d'au moins un silicate en feuillets sélectionné parmi le groupe des smectites sélectionnées parmi le groupe constitué de la montmorillonite comme la bentonite et la terre à foulon, l'hectorite, l'antigorite, la nontronite, la beidellite, la saponite, le groupe des vermiculites, le groupe des illites ou des micas ainsi que la sépiolite, l'attapulgite (palygorskite), la stévensite ou la chlorite, par rapport au poids total de la barbotine ou de la suspension ;
b) un milieu de suspension aqueux ;
c) un agent dispersant sélectionné parmi au moins un polyéthylèneglycol avec un poids moléculaire moyen inférieur à 90 000.

2. Barbotine selon la revendication 1, **caractérisée en ce que** l'au moins un polyéthylèneglycol présente un poids moléculaire moyen inférieur à environ 80 000, notamment inférieur à environ 70 000, notamment compris entre environ 200 et environ 50 000, de préférence entre environ 2000 et 20 000, de manière davantage préférée entre environ 4000 et 15 000.

3. Barbotine selon l'une quelconque des revendications précédentes, **caractérisée en ce que** la proportion de cations divalents sur la CEC de l'au moins un silicate en feuillets se situe à au moins 30 %, notamment au moins 40 %.

4. Barbotine selon l'une quelconque des revendications précédentes, **caractérisée en ce que** la barbotine ou suspension ne présente outre les composants a), b) et c) aucun composant contenant des cations métalliques monovalents.

5. Barbotine selon l'une quelconque des revendications précédentes, **caractérisée en ce que** la valeur de pH de la barbotine se situe entre environ 5 et 10, notamment entre environ 6 et 9, de manière davantage préférée entre environ 6,5 et 8,5.

6. Barbotine selon l'une quelconque des revendications précédentes, **caractérisée en ce que** la valeur de pH selon la revendication 5 est réglée par addition d'au moins un acide.

7. Barbotine selon l'une quelconque des revendications précédentes, **caractérisée en ce qu'**il s'agit pour l'au moins un silicate en feuillets d'un silicate en feuillets gonflable.

8. Barbotine selon l'une quelconque des revendications précédentes, **caractérisée en ce qu'**il s'agit pour l'au moins un silicate en feuillets d'un silicate en feuillets contenant du calcium.

9. Barbotine selon l'une quelconque des revendications précédentes, **caractérisée en ce qu'**il s'agit pour l'au moins un silicate en feuillets d'un silicate en feuillets smectique.

10. Barbotine selon l'une quelconque des revendications précédentes, **caractérisée en ce que** la teneur en ions métalliques monovalents et ions ammonium, notamment la teneur sodique de la barbotine se situe à moins de 0,5 % en poids, notamment moins de 0,1 % en poids, de préférence moins de 0,05 % en poids, de manière davantage préférée moins de 0,01 % en poids, dans laquelle la teneur de l'au moins un silicate en feuillets en ions métalliques monovalents et ions ammonium, notamment ions sodiques, n'est pas prise en compte.

11. Barbotine selon l'une quelconque des revendications précédentes, **caractérisée en ce qu'**il s'agit pour les cations divalents dans au moins un silicate en feuillets d'ions de calcium et/ou de magnésium.

12. Barbotine selon l'une quelconque des revendications précédentes, **caractérisée en ce que** la proportion des cations monovalents, notamment des ions sodiques, sur la CEC de l'au moins un silicate en feuillets se monte à moins de 65 %.

13. Barbotine selon l'une quelconque des revendications précédentes, **caractérisée en ce que** la CEC de l'au moins un silicate en feuillets se situe à plus de 70 meq/100 g, de préférence à une valeur supérieure ou égale à 75 meq/100 g.

14. Barbotine selon l'une quelconque des revendications précédentes, **caractérisée en ce que** la teneur de la barbotine en l'au moins un silicate en feuillets se situe à plus de 15 % en poids, notamment plus de 20 % en poids, de manière davantage préférée plus de 30 % en poids, de manière particulièrement préférée plus de 40 % en poids.

15. Barbotine selon l'une quelconque des revendications précédentes, **caractérisée en ce qu'**il s'agit pour le milieu de suspension aqueux d'eau, d'une solution hydroalcoolique ou d'une solution aqueuse contenant du glycol.

16. Barbotine selon l'une quelconque des revendications précédentes, **caractérisée en ce que** l'au moins un polyéthylèneglycol est utilisé en une quantité comprise entre environ 0,1 et 10 % en poids, par rapport à l'au moins un silicate en feuillets, notamment environ 2 et 8 % en poids.

17. Procédé de fabrication d'une barbotine ou suspension selon l'une quelconque des revendications précédentes, **caractérisé en ce que** l'au moins un agent dispersant est d'abord présenté dans le milieu de suspension aqueux éventuellement avec addition d'un acide pour le réglage de la valeur de pH, puis l'au moins un silicate en feuillets est ajouté.

18. Utilisation d'au moins un polyéthylèneglycol avec un poids moléculaire moyen inférieur à 90 000 en tant qu'agent dispersant pour au moins un silicate en feuillets lors de la fabrication d'une barbotine ou suspension qui contient au moins 10 % en poids d'au moins un silicate en feuillets.

19. Utilisation selon la revendication 18, **caractérisée en ce que** la proportion de cations divalents sur la CEC de l'au moins un silicate en feuillets se situe à au moins 30 %, notamment au moins 40 %.

20. Utilisation selon la revendication 18 ou 19, **caractérisée en ce qu'**il s'agit pour l'au moins un silicate en feuillets d'un silicate en feuillets gonflable.

21. Utilisation selon l'une quelconque des revendications 18 à 20, **caractérisée en ce qu'**il s'agit pour l'au moins un silicate en feuillets d'un silicate en feuillets contenant du calcium.

22. Utilisation de la barbotine ou suspension selon l'une quelconque des revendications 1 à 16 dans des compositions de détergent ou de produit de lavage liquides, notamment des compositions de détergent et d'adoucissant liquides.

23. Utilisation de la barbotine ou suspension selon l'une quelconque des revendications 1 à 16 dans le domaine de l'industrie du papier, notamment lors de la lutte contre les impuretés ou dans des agents de rétention, ou en tant qu'épaississant ou adsorbant.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5484834 A
- WO 9322254 A
- EP 0485124 A1
- WO 9509135 A
- US 4916094 A
- US 5104551 A
- US 4476029 A
- US 5629368 A

**In der Beschreibung aufgeführte Nicht-Patentliteratur**

- **S. ABEND ; G. LAGALY.** *Applied Clay Science,* 2000, vol. 16, 201-227
- **A. ALEMDAR et al.** *Journal of Materials Science,* 2005, vol. 40, 171-177